Europäisches Patentamt

(19) European Patent Office

Office européen des brevets

(11) Publication number : **0 488 727 A1**

## (12) EUROPEAN PATENT APPLICATION

(21) Application number : **91311006.0**

(22) Date of filing : **28.11.91**

(51) Int. Cl.$^5$ : **B32B 5/08,** D21H 27/38, A43B 13/38

(30) Priority : **29.11.90 US 621083**

(43) Date of publication of application :
**03.06.92 Bulletin 92/23**

(84) Designated Contracting States :
**BE DE ES FR GB IT**

(71) Applicant : **British United Shoe Machinery Limited**
**P.O. Box 88 Ross Walk Belgrave**
**Leicester LE4 5BX (GB)**
(84) **GB**

(71) Applicant : **USM ESPANA, S.L.**
**Apartado 3174, Berenguer de Palou 64**
**E-08027 Barcelona (ES)**
(84) **ES**

(71) Applicant : **DVSG HOLDING GMBH**
**Postfach 94 01 66 Westerbachstrasse 47**
**W-6000 Frankfurt-am-Main 94 (DE)**
(84) **BE DE FR IT**

(72) Inventor : **Canary, Stephen A.**
**35 Joyce Drive**
**Westfield, MA 01085 (US)**

(74) Representative : **Atkinson, Eric**
**c/o British United Shoe Machinery Limited**
**P.O. Box 88 Ross Walk**
**Belgrave Leicester LE4 5BX (GB)**

(54) **Paperboard product.**

(57)    Laminated paperboard product is in the form of a ply comprising two layers (1, 2) formed from a mixture of polyolefin fibres and a softwood pulp, one (2) of said layers having more polyolefin fibre than wood pulp (the 'high polyolefin' layer) and the other (1) more wood pulp than polyolefin fibre (the 'low polyolefin' layer). In use two plies (A, B) may be superimposed with the high polyolefin layers in contact and laminated under heat and pressure to form a more rigid board. If desired, one ply (B) may be narrower than the other (A) so that a sheet may be formed of uniform thickness but having areas of different density/rigidty.

Fig. 4

EP 0 488 727 A1

The present invention relates to paperboard products in the form of sheet materials formed of polyolefin and wood fibre for die-cutting e.g. into shoe insoles and also in the form of shoe insoles or parts thereof.

In its broadest aspect the present invention provides a paperboard product comprising a first layer formed of a mixture of polyolefin fibres and long fibre softwood pulp, the quantity of polyolefin fibre being less than the quantity of wood pulp fibre in the mixture (the 'low polyolefin' layer), and a second layer formed of a mixture of polyolefin fibres and long fibre softwood pulp, the quantity of polyolefin fibre being greater than the quantity of wood pulp (the 'high polyolefin' layer), wherein said layers are superimposed on one another and bonded together, thus to form a single ply, by the melting of the polyolefin of each layer into the polyolefin and fibre matrix of the other layer. Additional conventional paper-making materials such as bonding agents, retention aids, and synthetic staple fibres can be added to the furnishes of each of the layers as desired, as can conventional fillers such as clay and talc, all of these additional materials being in conventional quantities.

To manufacture the paperboard product of the present invention, a first layer is "wet-laid" according to conventional paper-making techniques using conventional Fourdrinier equipment and then the other layer is similarly laid upon the first layer. The product is drained and water is removed according to the conventional techniques using vacuum and heating to predetermined temperatures. The resulting product has between about 0 and 8% by weight water, as is predetermined by the paperboard manufacturer. The resulting ply can be turned into rolls and stored in that form.

In the paperboard product in accordance with the invention preferably the polyolefin fibres have an average length between about 0.6 and 1.2mm and a maximum length of about 2.5mm, and the wood pulp fibres have a length betwween about 2 and 5mm, and the polyolefin content in the low polyolefin layer is between about 10 and 40 wt.% and in the high polyolefin layer is between about 15 and 80 wt.%. A suitable polyolefin for this purpose has been found to be polyethylene.

A paperboard product made as aforesaid has been found to have a number of uses. For example two plies each comprising a high polyolefin layer and a low polyolefin layer may be placed in partially overlapping relationship with one another with the high polyolefin layers in surface contact and the low polyolefin layers forming face and obverse sides of the product, the two plies being bonded together by the melting, under compression, of the polyolefin of each of said layers into the polyolefin and wood fibre matrix of adjacent layers, one of the plies being narrow in relation to the other so that in the region of overlap the plies are more compressed thus to provide a sheet material in which the physical characteristics are different in the areas provided by the two plies from those provided by only one ply. Desirably, moreover, the thickness of the product is substantially uniform throughout. A two-ply paperboard product thus obtained is especially useful in the manufacture of shoe insoles, in particular in that by the provision of different- densities in the different areas while the product is of substantially uniform thickness, a unitary product is thus provided but with different properties, e.g. stiffness and mouldability, in the different areas.

Currently, insoles for shoes wherein different characteristics are needed along the length of the product are formed by laminating paperboards of different characteristics or joining leather and paperboard together. In order to avoid lumps in such laminations, it is common to skive the ends of the different components prior to gluing or otherwise laminating them together to form a composite sheet that can be die-cut. With the aforementioned two-ply paperboard product of the present invention on the other hand, tedious steps such as skiving and joining can be eliminated.

As already mentioned, in the manufacture of the two-ply material, the two plies are placed in partial overlapping relationship with each other (with the high polyolefin sides in surface contact) and the plies are disposed between heated surfaces for a short period at pressures between about 2.75 and 4.15 MPa (400 and 600 psi) and at temperatures between 150 and 160°C. It is necessary to use temperatures that are below the degradation temperature of the cellulose in the wood pulp but above the melting point of the polyolefin while still being high enough to provide a relatively rapid heat transfer from the heat source into the body of the plies being made. Such heating causes the polyolefin to soften and melt so that the polyolefin of the various layers merges and flows into the fibre matrixes of the layers. Preferably, moreover, the finished product is in the form of an elongated sheet material in which an area provided by the two plies extends centrally along the length thereof and an area provided by only one ply extends at each side of the first-mentioned area. In such a case insoles can thereafter be cut from such sheet material, the central area providing the heel seat and shank portion of each insole and said portions being 'nested', the forepart portions being simultaneously cut from the outside areas alternately.

Insoles of a unitary construction produced as herein described may, when used in manufacture of shoes, be shaped by heat and pressure into any desired configuration while still providing rigidity where desired and flexibility as necessary. Moreover, additional flexibility, especially useful in high-heeled women's shoes, can be provided by forming grooves in at least the underside of the forepart of the insole so as to provide a sort of hinge which enables the insole to be bent more readily. Such grooves are conventionally formed by localized heating and compression.

In another example of the use of the paperboard product of the present invention two plies each comprising a high polyolefin layer and a low polyolefin layer are arranged in superimposed relationship with the high polyolefin layers in surface contact and with the low polyolefin layers forming face and obverse sides of the product, the layers being bonded together by the -melting, under compression, of the polyolefin of each of said layers into the polyolefin and fibre matrix of adjacent layers. A relatively rigid paperboard is thus produced which is suitable for use as, e.g., a lightweight shankboard for shoes. Such a shankboard would then be laminated with a conventional paperboard or non-woven insole forepart to form the complete insole. In use such a shankboard provides the heel seat and shank portion of the shoe insole while the forepart portion is of conventional insole material, the two portions being bonded together along a joining edge which has been skived prior to bonding. More particularly using the shankboard referred to above and die-cutting the heel seat and shank portions therefrom, preferably prior to such die-cutting the material is edge-skived, and indeed similarly prepared conventional paperboard or non-woven material suitable for the insole forepart portion is bonded to it. Alternatively, the shankboard may be separately die-cut and thereafter, usually following insertion of a metal shank, be laminated to a die-cut paperboard of non-woven component. If desired, it will be appreciated, the material providing the forepart portion may extend to cover the whole of the surface of the shankboard.

Whereas it is envisaged above that the single-ply paperboard product will first be produced by the paperboard manufacturer and will thereafter be treated to form two-ply products, whether by the paperboard manufacturer or a component producer, it is envisaged within some of the aspects of the present invention that a two-ply product, including such a product with areas of different densities (as discussed above), would be produced in a single operation.

There now follows a detailed description, to be read with reference to the accompanying drawings, of various products in accordance with the invention, which products have, it is to be appreciated, been selected merely by way of non-limiting example of the invention.

Figure 1 is a fragmentary perspective view of a single-ply paperboard product in accordance with the present invention;

Figure 2 is a fragmentary perspective view of a two-ply paperboard product in accordance with the invention;

Figure 3 is a top plan view of an insole formed from the two-ply paperboard product shown in Fig 2;

Figure 4 is a cross-sectional view of the insole, taken along the linp IV-IV of Figure 3;

Figure 5 is a cross-sectional view, generally similar to Fig 4, but showing a portion of the obverse side of the insole grooved to allow for greater flexibility.

Figure 6 is a top plan view of the two-ply product, showing the two plies in partially overlapping relationship, and also indicating how insoles can be die-cut alternately from the opposite "outside" areas provided by a single ply;

Figure 7 is a cross-sectional view of a shoe insole in which the shankboard is constituted by a two-ply product in accordance with the invention and is used in conjunction with a forepart portion of conventional paperboard or non-woven insole material; and

Figure 8 is a schematic diagram of equipment that can be used to produce the paperboard product in accordance with the present invention.

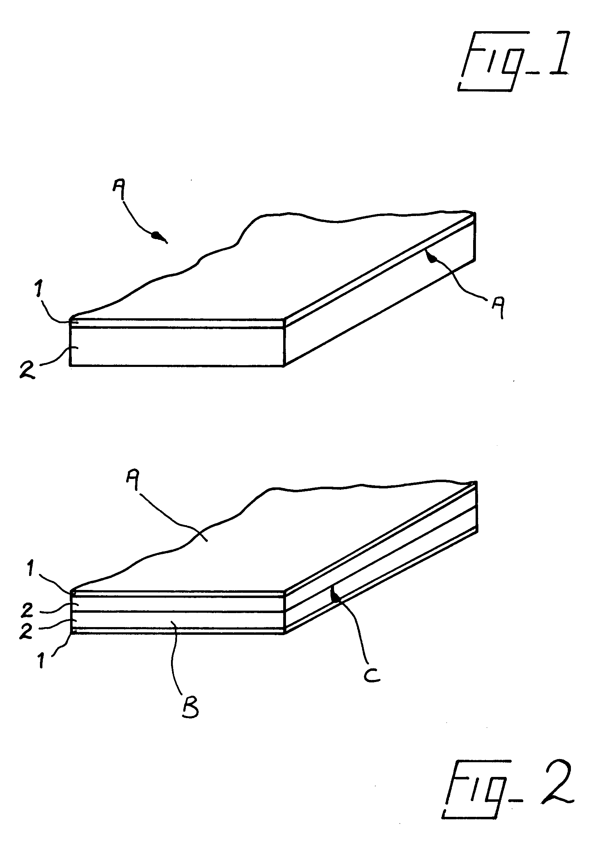

As shown in Fig 1, a paperboard product in accordance with the present invention comprises a single ply which consists of two layers 1 and 2. Layer 1 has a density of between about 400 and 500 kg/m$^3$ and a thickness between about 1.75 and 3.00mm (0.07 and 0.12"). Layer 1 forms between 10 to 20% of the thickness of the ply and layer 2 constitutes the balance.

Layer 1 generally has between about 10 and 40 wt.%, preferably 20 and 40 wt.% polyolefin fibres that have been rendered hydrophilic by a coating with polypropylene. This layer is referred to herein as a "low polyolefin" layer. One suitable polyolefin fibre has been found to be a coated polyethylene that is easily dispersed in water. The fibrils of the polyethylene have an average length between about 0.6 and 1.2mm (0.02 and 0.05") and a maximum length of about 2.5mm (0.10"). Layer 1 also contains a softwood pulp that has fibres with an averge length between about 2 and 5mm (0.075 and 0.20").

Layer 2 generally has between about 40 and 80 wt.%, preferably between about 55 and 65 wt.%, polyolefin also rendered hydrophilic by a coating of polypropylene, and of similar fibre length as layer 1. This layer is referred to herein as a "high polyolefin" layer.

In some cases, it may be desirable to reduce the brittleness of the product by adding up to about 10 wt.% polypropylene to the mixtures that are used to form the layers.

The two layers 1 and 2 are joined together at an interface A by melting the polyolefin fibres of each layer into the polyolefin and wood fibre matrix of the other layer. This is achieved, as will be described in more detail later, by the application to the layers of heat and pressure.

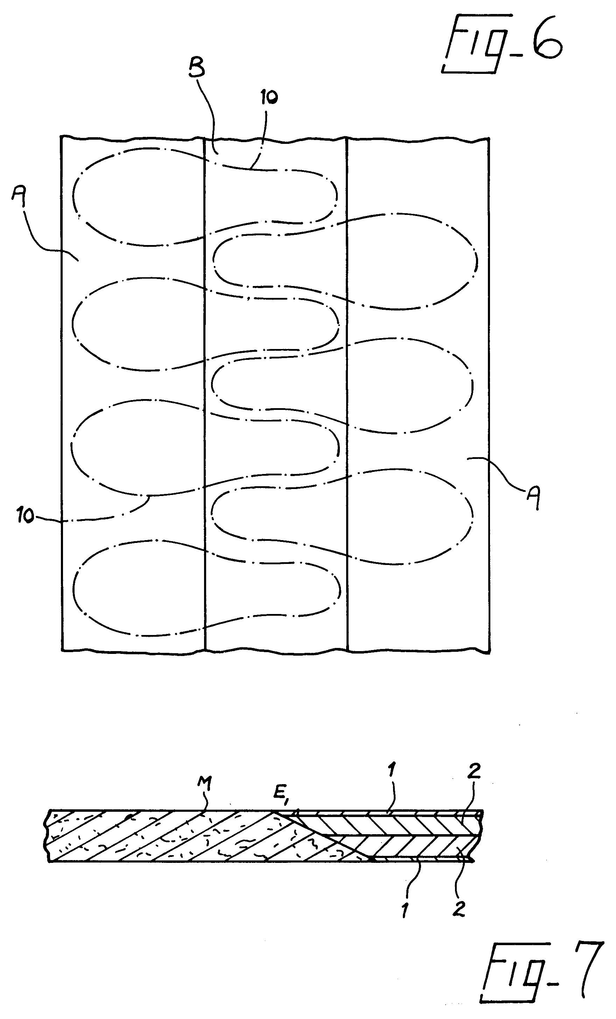

Figure 2 shows a two-ply product in accordance with the invention in which two plies A and B are laminated together at an interface C. The two-ply product is formed by passing the plies A and B between heated surfaces such as platens at predetermined temperatures and pressures so that they will join together. It will be observed that the high polyolefin layers 2 are in surface contact with each other and these layers and thus the plies are fixedly bonded together by intermelting the polyolefins in each of these layers. The low polyolefin layers 1 form the face and obverse sides of the two-ply product. Such a two-ply product is useful in shoe shankboards, as will be referred to hereinafter with reference to Figure 7.

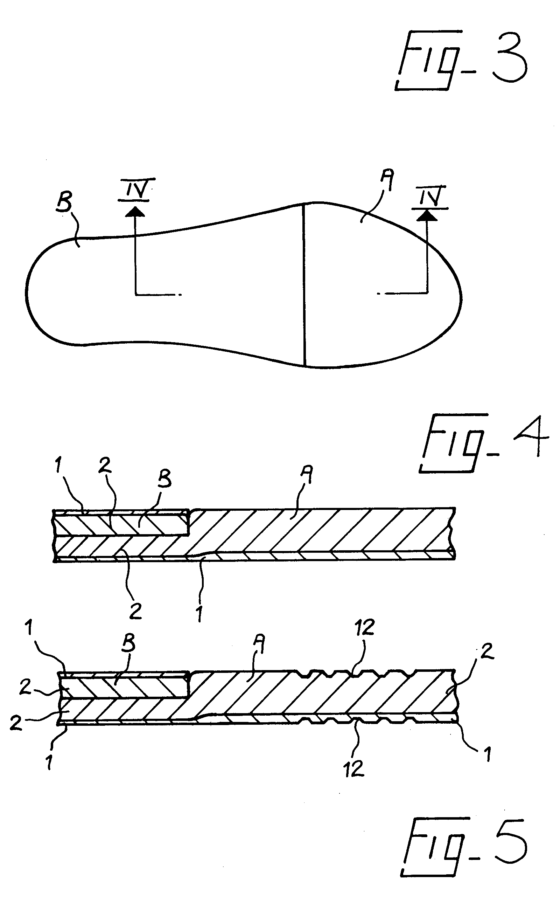

It is also possible in accordance with the invention to provide two-ply products having variations in density, and thus in flexibility, in different areas. For example, one area of the product may have a density between about 400 and 500 kg/m³ and another area can have a density between about 800 and 950 kg/m³, as will now be described with reference to Figs 4, 5 and 6.

Figure 4 shows an insole that has been die-cut from a two-ply paperboard product in accordance with the present invention. In this case (as shown in Fig 6) the plies are arranged in only partially overlapping relationship, again with the high polyolefin layers 1 in surface contact (see Figs 4 and 5), a first ply A being narrow in comparison with a second ply B and being laid centrally over the ply B. The plies are laminated together under heat and pressure, so that the finished product has a substantially uniform thickness across its entire width, as can be seen from Figs 4 and 5. As a result, the central area of the two-ply product has a significantly higher density than that of the outside areas.

As can be seen from Fig 6, the two-ply product can then be die-cut (as shown by dotted lines 10) with the cutting die disposed so as to cut across the overlap of the plies A and B. The die-cuts are staggered alternately between the left and right sides of the two-ply material thereby ensuring maximum utilization of the high cost central region, and thus minimizing cutting costs and waste.

It will be appreciated that in this way unitary insoles can be formed having a heel seat and shank portion made from the more rigid central region of the two-ply product and the forepart portion made from the relatively flexible region thereof, while the thickness of the insole remains substantially constant along its length.

In Fig 5, the same construction as Fig 4 is shown, except that the ply A has been grooved (as indicated at 12) in the area provided by only one ply thus to provide a sort of hinge affording additional flexibility in the ball region of insoles cut therefrom. Such grooving can be achieved by localized heating and compression.

In other applications similar to the foregoing the ply B may be narrower so that the plies may be placed with one edge in alignment but ply A does not extend across the whole width of ply B; that is to say ply B extends to only one side of ply A, thereby again providing different physical characteristics in different areas.

Fig 7 illustrates a further use of the product shown in Fig 2. In this case the two plies A and B are of the same surface area so that the product which has been laminated under conditions of heat and pressure is of relatively high density (i.e., similar to that of the central region of the product shown in Fig 6) and is relatively rigid. The material thus produced has been useful for shankboard, i.e. the relatively rigid board used for the heel seat and shank portions of an insole the forepart of which is provided by conventional paperboard of non-woven insole material M. In such use, the two-ply product and the paperboard or non-woven material are joined together in a conventional manner, namely by being skived so as to provide a joining edge having a wider surface for adhesion and to reduce the thickness at the joint therebetween. Preferably, bonding is by a hot melt adhesive.

If desired instead of being joined merely along said joining edge, the paperboard or non-woven material may also extend over the surface of the shankboard and be laminated therewith. Moreover the shankboard material and the paperboard or non-woven material may be joined either in sheet form, from which insoles may subsequently be cut, or the components may be cut from the separate materials and be subsequently joined. When the materials are secured together in sheet form, furthermore, if desired the shankboard material may be arranged centrally of the paperboard or non-woven material, generally as shown in Fig 6 with reference to the partial overlapping of two plies; in this latter case, cutting of insoles can then be effected as illustrated in Fig 6.

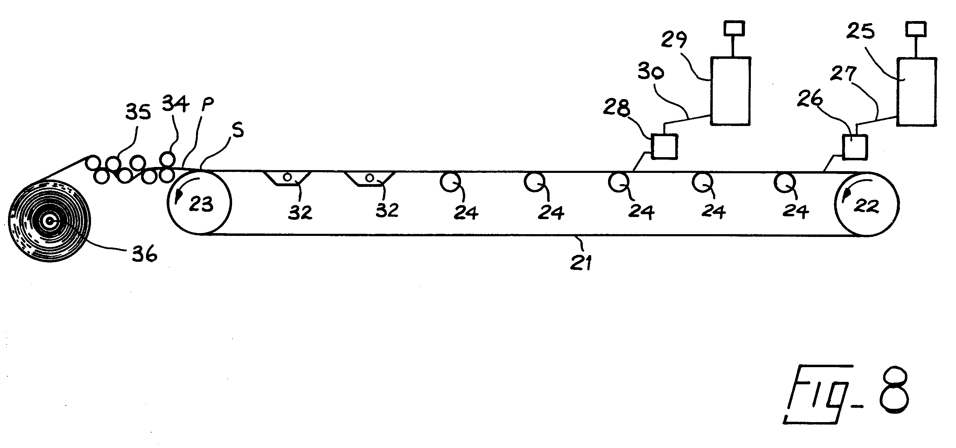

Referring now to Fig 8, a conventional Foudrinier machine is shown that is used for making paperboard according to conventional wet-laid paper making techniques. A conventional wire screen is disposed between two rotating drums 22 and 23, and is conventional in the art. Wire 21 rolls over rollers 24 which remove water from the wet-laid paper. A mixture of hydrophilic polyolefin and long fibre softwood pulp together with other common paper-making ingredients are mixed in tank 25 and carried to headbox 26 through pipe 37 to form one layer of the paperboard product. From headbox 26, the mixture flows onto the wire 21 as is conventional in the art. Water is removed as the wire and the wet-laid paper pass over the rollers 24 as a continuous sheet of material. As the wet-laid material passes beneath a second headbox 28, that is supplied from a second tank 29 through pipe 30, a second layer is deposited upon it. The ply that is thus formed passes further along on the Fourdrinier over additional rollers 24 and finally passes over a suction area 32 in which a predetermined quantity of water is removed from the paperboard. The ply of paperboard is then separated from the wire 21 at point S. After separation, the ply is passed between a pair of wet press rollers 34 to squeeze out such additional water as is desired. The paperboard product P is then drawn through a series of heating (drying) rolls 35 which quickly elevate the temperature of the product to a point where it is dried. The paperboard product is then rolled onto a drum 36 for subsequent use.

Details relating to the invention and to manners of making and using the invention will be more fully appreciated by reference to the following illustrative examples:

Example 1

The ply comprising the paperboard product of this Example consists essentially of two layers (layer 1 and 2, Fig 1) which include mixtures or blends of hydrophilic polyolefin and wood pulp fibres. The polyolefin included in both layers was a commercially available polyethylene sold under the tradename PULPEX ECP by Hercules Products Incorporated. PULPEX ECP has a specific gravity of about 905 kg/m$^3$ and a fusion temperature of about 165°C. The wood pulp fibre used in the first layer (i.e. the low polyolefin layer) was a commercially available wood fibre sold by I.T.T. Rayonier under the tradename GEORGIANER J. It is a long fibre, high tear strength wood pulp which is commonly used in kraft paper and is known for good formation, stiffness, strength and surface characteristics. It is an absorbent pulp, manufactured from southern U.S. pine and has a weighted average fibre length of about 2.60mm (0.10″) and a fibre length between about 2 and 5mm (0.075 and 0.20″). For the second layer (i.e. the high polyolefin layer) the wood pulp used was a commercially available softwood pulp sold by Western Pulp Corporation under the tradename ALICELL. It is a bleached sulfite pulp product which is known for its high bulk and is formed from western hemlock pine and has a fibre length between 2 and 5mm (0.075 and 0.20″), an average length being 4mm (0.16″).

The layers were prepared by dispersing the polyethylene and wood pulp fibre in water according to conventional paper-making techniques and procedures to provide a furnish having between about 5 and 7 wt.% solids and from about 93 to 95 wt.% water. In preparing the first layer, the percent by weight solids included about 30 percent by weight polyethylene and 70 percent by weight wood pulp fibre. For preparation of the second layer, the percent by weight solids included about 60 percent by weight polyethylene and about 40 percent by weight wood pulp fibre. The two layers were wet-laid using conventional Fourdrinier equipment and procedures and were pressed together by passing the layers between platens at a temperature of about 155°C and at a pressure of about 3.45MPa (500 psi).

Example 2

In this case, a two-ply product was formed during the manufacturing process (rather than laminating the finished product). The first (low polyolefin) layer of one of the plies was made in laboratory equipment by mixing 850 ml of tap water with 4gm of GEORGIANER J., 1.5gm of PULPEX ECP and 10 drops of 10% CARTASOL Blue E-RL liquid (dye). The furnish was dispersed on the wires of a 200 x 200mm (8 x 8″) handsheet mould at a setting of "8" for one minute. The second (high polyolefin) layer of the first ply was made by dispersing 20gm of ALICELL and 25gm of PULPEX ECP in 3l of water. The furnish was dispersed at a low speed for one minute. The first ply was then removed from the mould without applying a vacuum. In the same mould, the second ply was similarly formed and not vacuumed. The handsheet mould was then opened and the first ply was laid squarely onto the second ply. The edges of the handsheet mould were then sealed. The two-ply sheet was then removed from the wires and lightly wet-pressed between felts. The sheet was then dried at 110°C and consolidated between pre-heated press platens at a temperature of 175°C. After a period of 45 seconds the sheet was removed from the press.

**Claims**

1. A paperboard product comprising:

a first layer (1) formed of a mixture of polyolefin fibres and long fibre softwood pulp, the quantity of polyolefin fibre being less than the quantity of wood pulp fibre in the mixture (the 'low polyolefin' layer), and

a second layer (2) formed of a mixture of polyolefin fibres and long fibre softwood pulp, the quantity of polyolefin fibre being greater than the quantity of wood pulp (the 'high polyolefin' layer),

wherein said layers (1, 2) are superimposed on one another and bonded together, thus to form a single ply, by the melting of the polyolefin of each layer into the polyolefin and fibre matrix of the other layer.

2. A paperboard product according to Claim 1 wherein the polyolefin fibres have an average length between about 0.6 and 1.2mm and a maximum length of about 2.5mm, and the wood pulp fibres have a length between about 2 and 5mm.

3. A paperboard product according to Claim 1 or 2 wherein the polyolefin content in the low polyolefin layer is between about 10 and 40 wt.%, and in the high polyolefin layer is between about 15 and 80 wt.%.

4. A paperboard product according to any one of the preceding Claims wherein the polyolefin comprises polyethylene.

5. A paperboard product according to any one of the preceding Claims comprising two plies (A, B) each comprising a high polyolefin layer (2) and a low polyolefin layer (1) as aforesaid,

wherein the two plies (A, B) are arranged in partially overlapping relationship with the high polyolefin layers (2) in surface contact and the low polyolefin layers (1) forming face and obverse sides of the product, the two plies being bonded together by the melting, under compression, of the polyolefin of each of said layers into the polyolefin fibre and matrix of adjacent layers, and

wherein one (B) of the plies (A, B) is narrow in relation to the other (A) so that in the region of overlap the plies are more compressed thus to provide a sheet material in which the physical characteristics are different in the areas provided by the two plies from those provided by only one ply.

6. A paperboard product according to Claim 5 which is of substantially uniform thickness throughout.

7. A paperboard product according to Claim 5 or Claim 6 in the form of an elongated material,

wherein an area provided by the two plies (A, B) extends centrally along the length thereof and an area provided by only one ply (A) extends at each side of the first-mentioned area.

8. A paperboard product according to any one of Claims 1 to 4 comprising two plies (A, B) each comprising a high polyolefin layer (2) and a low polyolefin layer (1) as aforesaid,

wherein the two plies (A, B) are arranged in superimposed relationship with the high polyolefin layers (2) in surface contact and with the low polyolefin layers (1) forming face and obverse sides of the product, the layers being bonded together by the melting, under compression, of the polyolefin of each of said layers into the polyolefin and fibre matrix of adjacent layers.

9. A paperboard product according to Claim 6 or Claim 7 in the form of a shoe insole, wherein the heel seat and shank portion of the insole is constituted by said area provided by the two plies (A, B) and the forepart portion is constituted by said area provided by only one ply (A).

10. A shoe insole constituted by

a heel seat and shank portion made from a paperboard product according to Claim 5, and

a forepart portion of conventional insole material (M),

wherein said portions are bonded together along a joining edge (E,) which has been skived prior to bonding.

*Fig_1*

*Fig_2*

Fig. 3

Fig. 4

Fig. 5

8

Fig_6

Fig_7

Fig-8

**European Patent
Office**

## EUROPEAN SEARCH REPORT

Application Number

EP    91 31 1006
Page 1

| Category | Citation of document with indication, where appropriate, of relevant passages | Relevant to claim | CLASSIFICATION OF THE APPLICATION (Int. Cl.5) |
|---|---|---|---|
| X | FR-A-2 346 521 (IMPERIAL CHEMICAL INDUSTRIES LTD.) | 1,3,4 | B32B5/08 |
| A | * page 1, line 38 - page 3, line 5; claims * | 2 | D21H27/38 |
| | --- | | A43B13/38 |
| X | FR-A-2 425 938 (MONTEDISON S.P.A.) | 1-4 | |
| | * page 1, line 28 - line 31; claims; example * | | |
| | * page 3, line 28 - page 4, line 8 * | | |
| | --- | | |
| X | FR-A-2 449 160 (MONTEDISON S.P.A.) | 1,3,4 | |
| A | * page 3, line 23 - line 26; claims 1,4; examples * | 2,5 | |
| | --- | | |
| X | GB-A-1 432 978 (UMA SEISHI KABUSHIKI KAISHA) | 1,3,4 | |
| | * page 1, line 82 - page 2, line 3; claims * | | |
| | * page 3, line 35 - line 106 * | | |
| A | | 2 | |
| | --- | | |
| Y | GB-A-1 500 542 (MONTEDISON S.P.A.) | 1,3,4 | |
| | * page 1, line 55 - line 64; claims * | | |
| | * page 1, line 78 - line 90 * | | |
| | * page 2, line 52 - line 56 * | | TECHNICAL FIELDS SEARCHED (Int. Cl.5) |
| A | | 2 | |
| | --- | | |
| Y | DATABASE WPIL, accession nr. 83-19006K (08); Derwent Publications, Ltd., London, GB; &JP-A-58008197(MITSUI PETROCHEM IND KK)18-01-83 *whole abstract* | 1,3,4 | D21H B32B |
| A | | 5 | |
| | --- | | |
| A | EP-A-0 042 716 (MONTEDISON S.P.A.) | 1-5 | |
| | * example 5 * | | |
| | --- | | |
| | -/-- | | |

The present search report has been drawn up for all claims

| Place of search | Date of completion of the search | Examiner |
|---|---|---|
| THE HAGUE | 27 MARCH 1992 | PAMIES OLLE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ................................................................
& : member of the same patent family, corresponding document

EPO FORM 1503 03.82 (P0401)

11

EP 0 488 727 A1

| European Patent Office | EUROPEAN SEARCH REPORT | Application Number |
|---|---|---|

EP 91 31 1006
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 84, no. 18, 3 May 1976, Columbus, Ohio, US; abstract no. 123721C, S. TAKADA ET AL.: 'PAPER LAMINATES' page 108 ; column LEFT ; * abstract * & JP-A-50 154 507 (KANEGAFUCHI CHEMICAL INDUSTRIES CO LTD.) | 1-4 | |

TECHNICAL FIELDS
SEARCHED (Int. Cl.5)

The present search report has been drawn up for all claims

| Place of search | Date of completion of the search | Examiner |
|---|---|---|
| THE HAGUE | 27 MARCH 1992 | PAMIES OLLE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12